Europäisches Patentamt

European Patent Office

Office européen des brevets

(11) Publication number: **0 104 328**
**B1**

# EUROPEAN PATENT SPECIFICATION

(45) Date of publication of patent specification: **23.11.89**

(21) Application number: **83106323.5**

(22) Date of filing: **29.06.83**

(51) Int. Cl.⁴: **C 09 K 11/88,  H 01 J 29/20**

(54) **Cathodoluminescent red-emitting superlinear phosphor.**

(30) Priority: **28.09.82 JP 167714/82**

(43) Date of publication of application:
**04.04.84 Bulletin 84/14**

(45) Publication of the grant of the patent:
**23.11.89 Bulletin 89/47**

(84) Designated Contracting States:
**DE FR GB**

(56) References cited:
**DE-C- 868 036**
**FR-A-2 345 502**

(73) Proprietor: **International Business Machines
Corporation
Old Orchard Road
Armonk, N.Y. 10504 (US)**

(72) Inventor: **Toyokawa, Kazuharu
2-17-1, Chuorinkan
Yamato-shi Kanagawa-ken (JP)**
Inventor: **Ohtani, Hiroko
1-2-23, Sonan
Sagamihara-shi Kanagawa-ken (JP)**

(74) Representative: **Barth, Carl Otto et al
IBM Deutschland GmbH Patentabteilung
Schönaicher Strasse 220
D-7030 Böblingen (DE)**

EP 0 104 328 B1

Courier Press, Leamington Spa, England.

# EP 0 104 328 B1

**Description**

Background of the invention

The invention relates to a red-emitting phosphor for color cathode ray tubes (hereinafter referred to as CRTs) and more particularly to a red-emitting superlinear phosphor for a current-sensitive, single-gun color CRT.

As a CRT capable of displaying letters and/or pictures in colors, the so-called current-sensitive or current-control type, single-gun color CRT is well known. The structure of such a CRT is similar to that of an ordinary monochromatic CRT except for the phosphor screen. The phosphor screen is formed by mixing phosphors having different emission chromaticity and different luminance versus current density behavior. In general, a phosphor with superlinear luminance/current density characteristics and a phosphor with sublinear luminance/current density characteristics are mixed and the emission chromaticity is controlled by varying the current density of the electron beam.

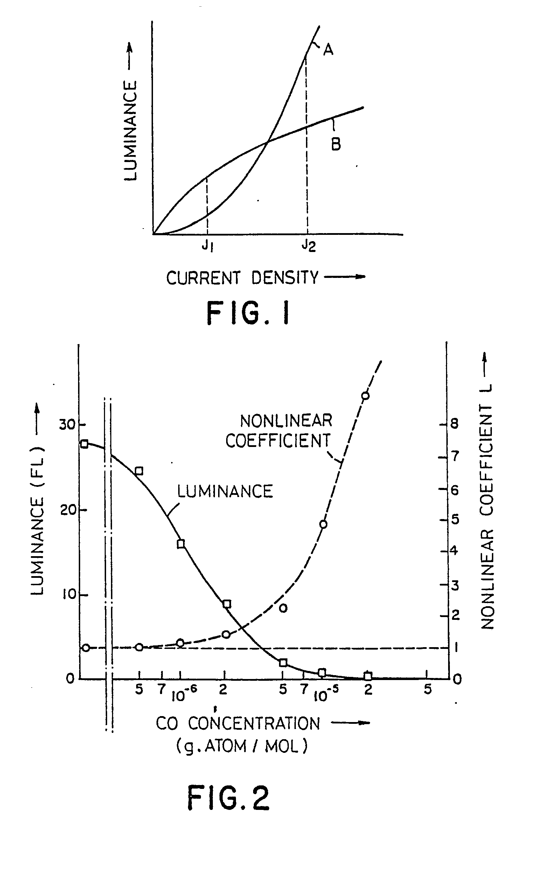

Fig. 1 shows characteristics of such a current-sensitive phosphor screen. The phosphor A has superlinear luminance/current density characteristics, whereas the phosphor B has sublinear luminance/current density characteristics. At a lower current density $J_1$, the emission color of phosphor B is dominant because the luminance magnitude of this phosphor is higher than that of phosphor A, and vice versa the emission color of the phosphor A will be dominant at a higher current density $J_2$. Therefore, it is possible to shift the emission color continuously and polychromatically by controlling the current density of the electron beam, with such a mixture of a superlinear phosphor and a sublinear phosphor having different chromaticity respectively.

Because of its use of a single gun and color selection through control of beam current, in the same manner as the luminance modulation for the ordinary monochromatic CRT, the current-sensitive color CRT has such advantages as simple structure, high grade of resolution and no necessity of convergence control in comparison with a three-gun shadow-mask type color CRT, but on the other hand it has the disadvantage of a small color gamut.

In the prior art there have been several trials to obtain a suitable mixture of a red-emitting phosphor with a green-emitting phosphor. However, it is not desirable to use a green-emitting phosphor as the superlinear one and a red-emitting phosphor as the sublinear one, because the luminosity sensitivity of the human eye is higher at green and lower at red, resulting in large luminance variations perceived by the eye with the change in current density and thus color. So, to lessen the variation in luminance by colors, it is necessary to use a red-emitting phosphor as the superlinear one and a green-emitting phosphor as the sublinear one.

However, though $Zn_2SiO_4$:Mn and others are known as green-emitting phosphors with acceptable sublinear characteristics in the prior art, there was no satisfactory red-emitting phosphor with superlinear characteristics.

In the paper entitled "Current-sensitive Single-gun Color CRT" by T. E. Sisneros et al., Information Display, April, 1970, pp. 33—37, (Zn, Cd)S:Ag, Ni is pointed out as a red-emitting phosphor with superlinear characteristics. However, as the paper indicated, (Zn, Cd)S:Ag, Ni exhibits acceptable superlinear characteristics only in the intermediate region between green and reddish orange, so there was only a narrow range of chromaticity shift obtained from its mixture with a green-emitting sublinear phosphor. Thus, there clearly exists a need of a red-emitting superlinear phosphor.

Disclosure of the invention

Therefore, it is an object of this invention to provide a phosphor with good superlinear characteristics in the pure red color region.

The invention as claimed proposes to add cobalt (Co) to a red-emitting phosphor which includes ZnSe as a host material, Cu as an activator, and Al as a coactivator. It has been found that ZnSe:Cu, Al which has been known as a red-emitting linear phosphor of high color purity, changes its luminance/current density behavior to superlinear behavior by the addition of a small amount of Co while substantially maintaining its original red-emitting spectral characteristics. Therefore, it is now possible to get a wide chromaticity gamut ranging from green to yellow to orange to red by mixing the phosphor of the present invention with a known sublinear green-emitting phosphor.

In the following, preferred embodiments of the present invention will be described with reference to the drawing.

Brief explanation of drawing

Fig. 1 depicts superlinear and sublinear characteristics in general; and

Fig. 2 depicts Co concentration versus luminance and non-linear coefficient characteristics of the red emitting superlinear phosphor in accordance with the present invention.

Detailed description of the invention

The superlinear red-emitting phosphor of the present invention is easily obtainable by the addition of Co to the preparation mixture of the already publicly known red-emitting linear phosphor ZnSe:Cu, Al. As is well known, ZnSe:Cu, Al can be produced, for example, as follows: ZnSe powder of high purity,

2

say about 99.9999%, copper sulfate (II), aluminium sulfate and a suitable crystallization promoter (flux) are mixed in a solution and dried. After drying, the mixture is fired at about 1,030°C in $H_2S$ atmosphere.

Concentrations of Cu and Al to be added to 1 mol of ZnSe are generally selected from the viewpoint of emission efficiency in the following relationship:

$$X \leq X' \tag{1}$$

$$10^{-4} \leq X \leq 5 \times 10^{-3} \tag{2}$$

where X is Cu concentration (g. atom/mol) and X' is Al concentration (g. atom/mol). To improve emission efficiency, the concentration of Al as a coactivator should be as high or higher than the concentration of Cu as an activator.

ZnSe:Cu, Al has its peak emission efficiency at about $10^{-3}$ mol of Cu concentration, and it is not desirable to make the Cu concentration lower than $10^{-4}$ mol or higher than $5 \times 10^{-3}$ mol because in these cases the emission efficiency drops to below 50%.

ZnSe:Cu, Al obtained in such manner exhibits red-emitting spectrum characteristics with its peak at a wave length of 620 nm and a half-value width of 90 nm.

To add Co in accordance with the present invention, in the above stated production of ZnSe:Cu, Al, it is enough to add Co salt, for example, cobalt sulfate together with copper sulfate (II) and aluminium sulfate in the solution and similarly perform mixing, drying and firing treatments.

Experimental results have indicated that by addition of Co to ZnSe:Cu, Al, though no substantial change occurs in the emission spectrum characteristics, the emission efficiency rapidly drops with increase of Co concentration, and at the same time, the luminance/current density relationship changes from linear to superlinear with increase of Co concentration.

Fig. 2 exhibits the dependency of luminance (fL) and nonlinear coefficient L of the ZnSe:Cu, Al, Co phosphors on Co concentration, with the concentrations of the activator Cu and the co-activator Al at $10^{-3}$ g. atom/mol.

The non-linear coefficient L is defined by (Bh/Jh)/(Bl/Jl), where Bh and Bl are luminances of a phosphor at high and low current densities, Jh and Jl, respectively, and Jh and Jl are empirically defined as Jh=1.0 $\mu A/cm^2$ and Jl=0.05 $\mu A/cm^2$. L>1 means superlinear characteristics, L=1 means linear characteristics and L<1 means sublinear characteristics. Luminances were measured under conditions of an electron beam accelerating voltage of 10 KV and beam current density of 0.5 $\mu A/cm^2$.

As Fig. 2 indicates, the nonlinearity coefficient L begins to exhibit apparent superlinear characteristics at Co concentrations exceeding $10^{-6}$ g. atom/mol. The luminance drops with increase of Co concentration, and under the measurement conditions of electron beam accelerating voltage 10 KV and beam current density 0.5 $\mu A/cm^2$, it approaches to zero at Co concentrations exceeding $10^{-5}$ g. atom/mol. However, as was explained with reference to Fig. 1, a superlinear red-emitting phosphor is quite useful if it just possesses the required degree of luminance at high current density.

According to results of tests in the range of current densities 0.2—5.0 $\mu A/cm^2$ which is usually available in current sensitive CRTs, it has been found that at higher current densities, it is possible to achieve a fully acceptable luminance at Co concentrations of up to $2 \times 10^{-5}$ g. atom/mol. Therefore, it is desirable to select a Co concentration (Y) within the following range considering the conflicting nonlinearity coefficient and luminance characteristics:

$$10^{-6} \leq Y \leq 2 \times 10^{-5} \text{ g. atom/mol} \tag{3}$$

In case the Cu concentration (X) and Al concentration (X') in the host material meet the above expressions (1) and (2), an acceptable superlinear red-emitting phosphor was obtained in the range of Co concentrations represented by the above expression (3).

In case it is desirable to modify the luminance/current-density behavior or chromaticity of phosphor according to the invention, some modifications are allowable.

For example, a part of Se in the host material ZnSe is replaceable by S. As the S content increases, the chromaticity shifts in the direction of orange, and it is possible to get an orangeish mild red color by replacement of Se by S in the range of about 15 mol%. Further, in case of adjustment of luminance/current density behavior, it is possible to replace a part of Zn by Cd. Cd has a tendency to bring the superlinear behavior down unto nearly linear characteristics. The additive quantity has its limit at 10 mol% because an excess quantity of Cd can offset superlinear behavior.

A working example will now be described of the formation of a phosphor screen for a current-sensitive CRT by mixture of a superlinear red-emitting phosphor provided by the invention with a sublinear green-emitting phosphor.

ZnSe:Cu, Al, Co (where the concentrations of Cu and Al each were $10^{-4}$ g. atom/mol and the Co concentration was $5 \times 10^{-6}$ g. atom/mol) was used as a red-emitting superlinear phosphor. As a green-emitting sublinear phosphor $Zn_2SiO_4$:Mn (where Mn concentration is $10^{-2}$—$10^{-4}$ g. atom/mol) or (Zn, Cd)S:Ag (where the mol ratio of ZnS/CdS is 45/55—65/35 and Ag concentration is $10^{-5}$—$10^{-7}$

g. atom/mol) are both acceptable, and in this case $Zn_2SiO_4$:Mn (where Mn concentration was $10^{-4}$ g. atom/mol) was used as a green-emitting sublinear phosphor.

The used phosphors have following characteristics respectively.

| Phosphor | CIE Chromaticity coordinates (x, y) | Luminance (fL) 10 KV 0.5 µA/cm² | Non-linearity coefficient |
|---|---|---|---|
| ZnSe:Cu, Al, Co | (0.626, 0.373) | 3.7 | 2.2 |
| $Zn_2SiO_4$:Mn | (0.210, 0.710) | 8.0 | 0.38 |

ZnSe:Cu, Al, Co and $Zn_2SiO_4$:Mn were mixed in a weight ratio of 69:31 and then after being mixed in potassium silicate solution, coated on a transparent conductive glass layer by precipitation, to form a phosphor screen. The film density was 4 mg/cm². The phosphor screen after drying was attached to a test demountable CRT, and working current density, CIE chromaticity coordinates (x, y), luminance and chromaticity gamut were measured at a beam accelerating voltage of 10 KV. The following table presents measurement results of the characteristics of a prior art current-sensitive phosphor screen which was formed by a mixture in the weight ratio 5:1 of (Zn, Cd)S:Ag, Ni as a reddish superlinear phosphor with $Zn_2SiO_4$:Mn, and of the phosphor screen which was made in the aforementioned manner in accordance with the present invention.

| Screen | Current density (µA/cm²) | Luminance (fL) | CIE Chromaticity coordinates (x, y) | Chromaticity gamut $(\Delta u^2 + \Delta v^2)^{1/2}$ |
|---|---|---|---|---|
| Prior art | 0.1—5.0 | 1.5—<50 | (0.364, 0.583) to (0.565, 0.424) | 0.168 |
| Present invention | 0.05—2.5 | 0.7—21.9 | (0.364, 0.591) to (0.605, 0.386) | 0.222 |

The chromaticity gamut was measured, as indicated in the paper "Evaluation of current-sensitive color CRT screens" by T. E. Sinsneros, IEEE Transactions on Electron Devices, September, 1971, pp. 798—800, by the distance $(\Delta u^2 + \Delta v^2)^{1/2}$ between points (u, v) on a CIE-UCS diagram.

To summarize, by the use of a red-emitting superlinear phosphor of the present invention, it is possible to achieve a chromaticity shift over four colors from green to yellow to orange to red through increase in current density, and the chromaticity gamut was wider by about 32% than that of the prior art. And the improved color CRT was operable at relatively low current density. The luminance variation caused by chromaticity shift was lessened, too.

**Claims**

1. A cathodoluminescent red-emitting phosphor which includes ZnSe as a host material, Cu as an activator and Al as a coactivator, characterized by the inclusion of a small amount of Co to provide superlinear luminance/current density characteristics to said phosphor.

2. A red-emitting phosphor, as recited in claim 1, wherein the concentration of Co is in the range of $10^{-6}$—$2 \times 10^{-5}$ g. atom/mol.

3. A red-emitting phosphor, as recited in claim 1, wherein the concentrations of Cu, Al and Co are as follows:

$$X \leq X'$$

$$10^{-4} \leq X \leq 5 \times 10^{-3} \text{ g. atom/mol}$$

$$10^{-6} \leq Y \leq 2 \times 10^{-5} \text{ g. atom/mol}$$

where X is concentration of Cu, X' is concentration of Al, and Y is concentration of Co.

4. A red-emitting phosphor, as recited in Claim 3, wherein Se is replaced by S in the range of less than 15 mol percent.

5. A red-emitting phosphor, as recited in claim 3, wherein Zn is replaced by Cd in the range of less than 10 mol percent.

6. A phosphor screen for a current-sensitive, single-gun color CRT, comprising the mixture of a red-emitting superlinear phosphor and a green-emitting sublinear phosphor selected from $Zn_2SiO_4$:Mn

and (Zn, Cd)S:Ag, characterized in that the red-emitting phosphor is ZnSe:Cu, Al, Co according to a previous claim.

7. A phosphor screen, as recited in claim 6, wherein the concentration of Co is $10^{-6}$—$2\times10^{-5}$ g. atom/mol.

8. A phosphor screen, as recited in claim 7, wherein the concentration of Mn is in the range of $10^{-2}$—$10^{-4}$ g. atom/mol, the molar ratio of ZnS:CdS is in the range of 45:55 to 65:35, and the concentration of Ag is in the range of $10^{-5}$—$10^{-7}$ g. atom/mol.

**Patentansprüche**

1. Kathodenlumineszierender rotstrahlender Phosphor mit ZnSe als Hauptmaterial, Cu als Aktivator und Al als Koaktivator, gekennzeichnet durch den Einschluß einer geringen Menge von Co, um dem Phosphor superlineare Leuchtdichte/Stromdichte zu verleihen.

2. Rotstrahlender Phosphor nach Anspruch 1, bei dem die Konzentration von Co in der Größenordnung von $10^{-6}$—$2\times10^{-5}$ g. Atom/Mol liegt.

3. Rotstrahlender Phosphor nach Anspruch 1, bei dem die Konzentration von Cu, Al und Co wie folgt ist:

$$X \leq X'$$

$$10^{-4} \leq X \leq 5\times10^{-3} \text{ g. Atom/Mol}$$

$$10^{-6} \leq Y \leq 2\times10^{-5} \text{ g. Atom/Mol}$$

wobei X die Konzentration von Cu, X' die Konzentration von Al und Y die Konzentration von Co ist.

4. Rotstrahlender Phosphor nach Anspruch 3, bei dem Se durch S in der Größenordnung von weniger als 15 mol Prozent ersetzt wird.

5. Rotstrahlender Phosphor nach Anspruch 3, bei dem größenordnungsmäßig weniger als 10 Mol-Prozent Zn durch Cd ersetzt wird.

6. Phosphorschirm für eine stromsensitive Einzelsystem-Farbkathodenstrahlröhre, mit der Mischung des rotstrahlenden superlinearen Phosphors und eines grünstrahlenden sublinearen Phosphors aus $Zn_2SiO_4$:Mn und (Zn, Cd)S:Ag ausgewählt, dadurch gekennzeichnet, daß der rotstrahlende Phosphor gemäß einem der vorhergehenden Ansprüche ZnSe:Cu, Al, Co ist.

7. Phosphorschirm nach Anspruch 6, bei dem die Konzentration von Co $10^{-6}$—$2\times10^{-5}$ g. Atom/Mol beträgt.

8. Phosphorschirm nach Anspruch 7, bei dem die Konzentration von Mn in der Größenordnung von $10^{-2}$—$10^{-4}$ g. Atom/Mol liegt, das Molverhältnis von ZnS:CdS in der Größenordnung von 45:55 bis 65:35, und die Konzentration von Ag in der Größenordnung von $10^{-5}$—$10^{-7}$ g. Atom/Mol liegt.

**Revendications**

1. Matière cathodoluminescente émettant dans le rouge qui comprend du ZnSe en tant que matériau hôte, du Cu en tant qu'activateur et du Al en tant que coactivateur, caractérisé par l'inclusion d'une petite quantité de Co pour donner des caractéristiques sur-linéaires de luminance/densité de courant à cette matière cathodoluminescente.

2. Matière cathodoluminescente émettant dans le rouge selon la revendication 1, dans laquelle la concentration en Co appartient à la gamme $10^{-6}$—$2\times10^{-5}$ atom. g/mol.

3. Matière cathodoluminescente émettant dans le rouge selon la revendication 1, dans laquelle les concentrations en Cu, Al et Co sont comme suit:

$$X \leq X'$$

$$10^{-4} \leq X \leq 5\times10^{-3} \text{ atom. g/mol}$$

$$10^{-6} \leq Y \leq 2\times10^{-5} \text{ atom. g/mol}$$

où X est la concentration en Cu, X' est la concentration en Al, et Y est la concentration en Co.

4. Matière cathodoluminescente émettant dans le rouge selon la revendication 3, dans laquelle Se est remplacé par S dans moins de 15 moles pour cent.

5. Matière cathodoluminescente émettant dans le rouge selon la revendication 3, dans laquelle Zn est remplacé par Cd dans moins de 10 moles pour cent.

6. Ecran de matière cathodoluminescente pour un CRT couleur à canon unique et sensible au courant comprenant le mélange d'une matière cathodoluminescente sur-linéaire émettant dans le rouge et d'une matière cathodoluminescente sous-linéaire émettant dans le vert choisie parmi $Zn_2SiO_4$:Mn et (Zn,

## EP  0 104 328  B1

Cd)S:Ag, caractérisé en ce que la matière cathodoluminescente émettant dans le rouge est ZnSe:Cu, Al, Co selon l'une des revendications précédentes.

7. Ecran de matière cathodoluminescente selon la revendication 6, dans lequel la concentration en Co est $10^{-6}$—$2 \times 10^{-5}$ atom. g/mol.

8. Ecran de matière cathodoluminescente selon la revendication 7, dans lequel la concentration en Mn est comprise entre $10^{-2}$ et $10^{-4}$ atom. g/mol, le rapport molaire de ZnS:CdS est de l'ordre de 45:55 à 65:35, et la concentration en Ag est comprise entre $10^{-5}$ et $10^{-7}$ atom. g/mol.

FIG. I

FIG.2